# EUROPÄISCHE PATENTANMELDUNG

(11) **EP 2 098 928 A1**
(43) Veröffentlichungstag der Anmeldung: **09.09.2009**
(21) Anmeldenummer: 08102393.9
(22) Anmeldetag: 07.03.2008
(51) Int. Cl.: G05B 19/05, G06F 9/44

(54) **Verfahren und Vorrichtung zum Programmieren und/oder Konfigurieren einer Sicherheitssteuerung**

(71) Anmelder: SICK AG, 79183 Waldkirch (DE)
(72) Erfinder: Weddingfeld, Klaus, 79183 Waldkirch (DE)
(74) Vertreter: Hehl, Ulrich

(57) **Zusammenfassung**

Es wird ein Verfahren zum Programmieren und/oder Konfigurieren einer Sicherheitssteuerung (10) mit einer Steuerung (14) und mindestens einem Anschlussmodul (16) angegeben, welches zumindest einen Eingang (18) für einen Sensor (20) und/oder zumindest einen Ausgang (22) für einen Aktor (24) aufweist, wobei Verbindungen zwischen den Sensoren (20) und Aktoren (24) und den Eingängen (18) und Ausgängen (22) als Verdrahtungsplan und logische Auswertungsregeln, welche festlegen, wie Signale der Sensoren (20) zu Ansteuerungen für die Aktoren (24) zu verrechnen sind, als Auswertungslogik eingestellt und in einer grafischen Benutzeroberfläche angezeigt werden. Dabei bleibt bei einer Veränderung des Verdrahtungsplans die Auswertungslogik erhalten.

## Beschreibung

Die Erfindung betrifft ein Verfahren zum Programmieren und/oder Konfigurieren einer Sicherheitssteuerung nach dem Oberbegriff von Anspruch 1 sowie eine Vorrichtung zur Durchführung des Verfahrens gemäß Anspruch 9.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden. Dabei ist eine fehlerfreie Konfiguration und Programmierung besonders wichtig, da sonst die Anlage nicht als sicher zertifiziert wird und damit nicht oder nur eingeschränkt eingesetzt werden kann.

Aus der EP 1 362 269 B1 ist ein Programmierverfahren bekannt, bei dem Eingänge, logische Verarbeitungsregeln und Ausgänge für eine Sicherheitssteuerung konfiguriert und ein Programm für den Betrieb einer Sicherheitssteuerung mit den konfigurierten Elementen zusammengestellt wird. Bei diesem Verfahren wird aber die physische Anordnung und Verdrahtung der Elemente nicht dargestellt, so dass das herkömmliche Verfahren nicht beim physischen Aufbau der Anlage unterstützt. Überdies ist nicht frei konfigurierbar, welche Eingänge auf welchen Ausgang wirken, denn es ist gerade die Idee des herkömmlichen Verfahrens, diese Zuordnung durch die tatsächliche relative Anordnung von Anschlüssen und Modulen festzulegen.

In der noch unveröffentlichten eigenen Anmeldung unter dem Aktenzeichen EP 07013210.5 ist ein alternatives Verfahren zur Programmierung beschrieben. Dabei wird nicht nur die Auswertungslogik, sondern auch der physische Verdrahtungsplan mit einer grafischen Benutzeroberfläche erstellt. Dieses Verfahren geht aber in keiner Weise auf die Frage ein, was mit der Auswertungslogik geschieht, wenn sich der Verdrahtungsplan ändert, so dass der Offenbarung gemäß eine Änderung der Verdrahtung der Neuanlage eines Verdrahtungsplans entspricht, in deren Folge die Auswertungslogik neu konfiguriert wird. Jede Änderung des Verdrahtungsplans führt also zu erheblichem Mehraufwand für die Neukonfiguration der Logik.

In der WO98/44399 A2 ist ein weiteres Verfahren zur Programmierung eines sicherheitsgerichteten Steuerungssystems offenbart, welches die Auswahl von Software-Makros mit den steuerungstechnischen Regeln zur Verknüpfung von Eingängen und Ausgängen ermöglicht. Die als relativ klein beschriebenen Programmteile in den Software-Makros können dabei vorab per Simulation und Testverfahren sicher gemacht werden. Das Konfigurieren eines Verdrahtungsplans offenbart diese Schrift nicht. Das herkömmliche Verfahren unterstützt daher nicht bei der Planung und Umsetzung der physischen Verbindungen, so dass ein Großteil der Konfiguration weiterhin mit dem entsprechenden Aufwand von Hand vorgenommen werden muss.

Es ist daher Aufgabe der Erfindung, eine Möglichkeit für die Programmierung oder Konfiguration einer Sicherheitssteuerung zu schaffen, welche auf einfache und flexible Weise die Erstellung und Umsetzung von Verbindungskonfigurationen zwischen Sensoren, Aktoren und Sicherheitssteuerung ermöglicht.

Diese Aufgabe wird durch ein Verfahren zum Programmieren und/oder Konfigurieren gemäß Anspruch 1, eine entsprechende Vorrichtung gemäß Anspruch 9 sowie ein Computerprogrammprodukt gemäß Anspruch 10 gelöst. Der Begriff Sensor soll in einem sehr weiten Sinne als allgemeiner Signalgeber verstanden werden, der nicht unbedingt Ereignisse in der Umwelt detektiert, sondern beispielsweise auch wie ein Schalter oder eine Zeitschaltuhr Signale ausgibt. Die Steuerung kann in einer kompakten Ausführungsform Teil des Anschlussmoduls sein, welches dann gleichzeitig Steuerungs- und Anschlussmodul ist, gewöhnlich ist aber ein eigenes Steuerungsmodul vorgesehen. Die Steuerung kann zentral oder verteilt sein, und zwar sowohl über mehrere Module ein und derselben Modulreihe als auch verteilt über mehrere Modulreihen, welche untereinander über Feldbus oder dergleichen kommunizieren.

Die Erfindung geht von der Grundidee aus, dass die Auswertungslogik etwas Abstraktes ist. Deshalb können Auswertungsregeln im Prinzip bestehen bleiben, obwohl Änderungen im Verdrahtungsplan vorgenommen werden. Dabei ist nur die abstrakte Auswertungslogik invariant gegenüber solchen Änderungen. Das Steuerungsprogramm selbst wird für einen konkreten Verdrahtungsplan generiert und funktioniert nicht oder falsch, wenn irgend eine Änderung der Verdrahtung vorgenommen wird. Es ist bei Sicherheitssteuerungen völlig inakzeptabel und lebensgefährlich für Bedienpersonen, wenn die Anschlüsse gegenüber der vorgesehenen Konfiguration verändert werden, mit der Folge, dass etwa statt eines eigentlich vorgesehenen Nothalts einer Presse aufgrund einer Änderung der Anschlüsse nur eine Sirene ertönt. Daher ist ein wichtiger Erfindungsgedanke, die abstrakte Auswertungslogik vom konkreten Steuerungsprogramm zu trennen und zu erkennen, dass die abstrakte Logik bei Veränderungen der Verdrahtung während der Konfiguration automatisch nachgeführt werden kann, während dann erst bei Überspielen des Steuerungsprogramms auf die Sicherheitssteuerung der konkrete und ab diesem Zeitpunkt nicht mehr veränderbare Verdrahtungsplan eingeht.

Die erfindungsgemäße Lösung hat damit den Vorteil, dass während der Planung und Konfiguration von Verdrahtungsplan und Auswertungslogik eine hohe Flexibilität besteht. Die Sicherheitssteuerung kann mit ihren Anschlusszuordnungen angepasst und verändert werden, und die Auswertungslogik bleibt stets automatisch konsistent. Der Sicherheitsabschaltpfad bleibt bei Veränderungen des Verdrahtungsplans identisch, was durch Nachführung der Auswertungslogik auf die neue Zuordnung der Anschlüsse automatisch nachgeführt wird. Dies erleichtert und vereinfacht die Erstellung eines Verdrahtungsplans erheblich, da man nicht mehr gezwungen ist, sich den konkreten Plan vorab bis zu Ende zu überlegen, sondern ihn dynamisch entwerfen kann. Erreichte Zwischenergebnisse müssen bei Änderungen nicht mehr aufgegeben werden. Besonders bei Erweiterungen oder Anpassungen größerer Systeme führt diese Flexibilität zu übersichtlicheren und besseren Konfigurationsergebnissen bei deutlich verringertem Konfigurationsaufwand.

Veränderungen des Verdrahtungsplans erfolgen bevorzugt durch manuelles oder automatisches Verschieben von Sensoren oder Aktoren auf andere Eingänge oder Ausgänge, Vertauschen von Anschlüssen von Sensoren oder Aktoren an Eingängen oder Ausgängen, Austausch, Vertauschen, Wegnahme oder Hinzufügen eines Anschlussmoduls und Neuzuweisung der Sensoren oder Aktoren auf das neue oder andere Anschlussmodule. Damit ist jede denkbare Änderung an den Anschlussmodulen und ihren Eingängen und Ausgängen umfasst. Änderungen, bei denen Sensoren oder Aktoren vollständig entfernt oder hinzugefügt werden, sind ein Sonderfall, denn hier können die Auswertungsregeln nicht ohne Weiteres erhalten bleiben. Ein hinzugefügter Sensor oder Aktor muss logisch eingebunden werden, wobei automatische Vorschläge anhand von häufigen, bevorzugten oder zu dem Sensor beziehungsweise Aktor gespeicherten Logikregeln gemacht oder sogar automatisch eingesetzt werden können. Umgekehrt bleiben in der Regel bei Entfernen eines Sensors oder Aktors einige Bedingungen in den Logikregeln undefiniert und müssen angepasst werden. Die verbleibende Teillogik der restlichen Sicherheitssteuerung kann aber erhalten bleiben. Durch die beschriebenen möglichen Veränderungen des Verdrahtungsplans entsteht also die größtmögliche automatisch unterstützbare Flexibilität. Die Steuerungsapplikation wird dabei immer konsistent gehalten, und die Fehleranfälligkeit wird durch diese automatische Konsistenz von Verdrahtungsplan, Auswertungslogik beziehungsweise Zuordnungsliste von Anschlüssen reduziert.

Der Verdrahtungsplan und die Auswertungslogik werden bevorzugt mittels einer grafischen Benutzeroberfläche erzeugt oder von einem Speichermedium geladen, insbesondere einem Speichermedium der Sicherheitssteuerung oder eines Sensors oder Aktors. Dabei sind auch Mischformen denkbar, also das Laden und anschließende Bearbeiten, Erweitern oder Anpassen von Verdrahtungsplan und Auswertungslogik. Die grafische Benutzeroberfläche bietet eine sehr übersichtliche Möglichkeit, die Konfiguration zu planen und umzusetzen. Durch Laden können fertige Konfigurationen für typische oder von einem Experten bereitgestellte Sicherheitsanwendungen übernommen werden. Es ist auch möglich, die tatsächliche Konfiguration einer Anlage automatisch einzulesen, um sie entweder in der Sicherheitssteuerung abzubilden und im Weiteren von dort zu steuern, oder um sie an anderer Stelle zu kopieren. Die zentrale Steuerung, Sensoren und Aktoren können vorgefertigte Vorschläge zur Umsetzung eines Sicherheitskonzepts als Verdrahtungsplan und/oder Auswertungslogik mitbringen.

Die erstellte Auswertungslogik wird vorteilhafterweise darauf geprüft, ob gestellte Sicherheitsanforderungen erfüllt werden, insbesondere Schaltzeiten und sichere Schaltwege, und/oder Teillogiken werden ersetzt oder vorgeschlagen. Es gibt in Sicherheitsanwendungen normierte oder angepasste Anforderungen, die zu erfüllen sind. Einige davon lassen sich als generalisierte Regeln definieren, auf die eine Auswertungslogik automatisch geprüft werden kann. So bedarf es beispielsweise sehr guter Gründe, einen Not-Aus-Schalter einkanalig einzubinden, oder wenn dessen Betätigung nicht zu einem Abschaltsignal einer Gefahrenquelle führt. Eine Sicherheitssteuerung ist nicht für eine bestimmte Kategorie tauglich, wenn die Schaltwege keine Abschaltung innerhalb der geforderten Ansprechzeit garantieren können. Solche Regeln können für die Sicherheitssteuerung selbst, aber auch für Sensoren und Aktoren bekannt sein und auch erweitert werden. Für manche Sensoren oder Aktoren ist vorhersehbar, welche Funktion sie erfüllen sollen, und deren Teillogik kann dann direkt als Block vorgeschlagen oder eingefügt werden. Ein gutes Beispiel ist wieder der Not-Aus-Schalter, der zweikanalig angeschlossen wird und im Regelfall auf alle Aktoren, zumindest aber auf einen Aktor wirken soll.

Der Verdrahtungsplan wird vorteilhafterweise durch Verschiebungen oder Vertauschungen von Zuordnungen zwischen Sensoren und Aktoren zu Eingängen und Ausgängen und/oder durch Verschiebungen, Austausch, Entfernen oder Ergänzen von Anschlussmodulen automatisch oder manuell optimiert, insbesondere um einen optisch oder funktionell übersichtlichen Verdrahtungsplan, kurze Schaltzeiten und/oder eine minimale Anzahl von Anschlussmodulen zu erreichen oder um Anschlüsse für weitere Sensoren und/oder Aktoren bereitzustellen. Derartige Optimierungen sind erfindungsgemäß leicht durchzuführen, weil die Logik die für die Optimierung vorzunehmende Änderung des Verdrahtungsplans automatisch nachführt. Es können daher sogar automatische Optimierungen vorgenommen werden, die vielleicht eine große Zahl von Änderungen erfordern, algorithmisch aber lösbar sind. Damit werden dem Anwender zahlreiche Schritte abgenommen, und er braucht bei der Planung auf Übersichtlichkeit, wenige Module oder dergleichen gar keine Rücksicht zu nehmen, da er abschließend und jederzeit zwischendurch die Optimierung durchführen lassen kann. Die Optimierung kann in einer Weiterbildung vorausgewählte Elemente mit einbeziehen, die ein Anwender für die spätere Einbindung markiert und dafür insbesondere in einem entsprechenden Zwischenbereich abgelegt hat. Dann stehen für diese vorausgewählten Elemente die optimalen Anschlüsse bereits vorab zur Verfügung. Es ist klar, dass sich neue Anschlüsse nur durch neue Anschlussmodule oder solche mit mehr oder andersartigen Anschlüssen schaffen lassen. Dennoch kann in bestimmten Situationen ein Anschluss auch durch bloße Vertauschungen freigemacht werden, beispielsweise sollten zweikanalige Anschlüsse nebeneinander oder zumindest nahe beieinander liegen, und ein zweikanaliger freier Anschluss lässt sich daher möglicherweise dadurch schaffen, dass einkanalige oder andere Anschlüsse bei konstanter Gesamtzahl der verfügbaren Anschlüsse verschoben werden.

Bei Entfernen eines Sensors oder eines Aktors aus dem Verdrahtungsplan wird die Auswertungslogik vorzugsweise gespeichert und bei erneutem Hinzufügen desselben oder eines funktionsgleichen Sensors oder Aktors die Auswertungslogik automatisch wiederhergestellt oder zur Wiederherstellung vorgeschlagen. Durch das Entfernen sind meistens Teile der Auswertungslogik undefiniert, weil Eingänge oder Ausgänge nicht mehr belegt sind. In diesem Fall die gesamte Auswertungslogik zu löschen ist aus Anwendersicht sehr unkomfortabel. Daher kann zumindest nur derjenige Anteil der Auswertungslogik gelöscht werden, der tatsächlich von dem entfernten Sensor oder Aktor abhängt. Noch eleganter ist es, wenn darüber hinaus die gesamte Auswertungslogik nur in einen unsichtbaren Speicher verschoben wird. Entscheidet sich der Anwender später, den entfernten Sensor oder Aktor doch wieder hinzuzufügen oder nur durch ein Element zu ersetzen, das in Bezug auf die Auswertungslogik völlig äquivalent ist, so versetzt die abgespeicherte Auswertungslogik das Konfigurationswerkzeug in die Lage, auch diese Veränderung des Verdrahtungsplans automatisch in der Logik nachzuführen. Diesem Automatismus kann sicherheitshalber eine Rückfrage an den Anwender vorgeschaltet werden.

In vorteilhafter Weiterbildung wird aus der Auswertungslogik ein Steuerungsprogramm generiert, indem zu logischen Auswertungsregeln hinterlegte Programmteile in der Sicherheitssteuerung erstellt, aktiviert und/oder verknüpft werden, und das Auswertungsprogramm wird sicher auf die zentrale Steuerung übertragen. Die als grafischer Plan vorliegende Auswertungslogik wird damit automatisch in ein von der Sicherheitssteuerung im Betrieb einsetzbares Steuerungsprogramm umgesetzt. In diesem Steuerungsprogramm sind die Zuordnungen von Sensoren und Aktoren zu Eingängen und Ausgängen festgelegt, Vertauschungen nach diesem Zeitpunkt sind nicht mehr erlaubt, damit nicht versehentlich falsche Sensorsignale ausgewertet oder gar falsche Ansteuerungen vorgenommen werden.

Bevorzugt testet die zentrale Steuerung, ob in der realen Anlage angeschlossene Sensoren und Aktoren dem Verdrahtungsplan entsprechend mit Eingängen und Ausgängen verbunden sind, wobei bei Abweichungen vom Verdrahtungsplan, welche mit der Auswertungslogik verträglich sind, ein neues Steuerungsprogramm generiert und in die zentrale Steuerung übertragen wird, welches der tatsächlichen Verdrahtung entspricht. Hiermit wird sichergestellt, dass der Verdrahtungsplan in der realen Anlage richtig umgesetzt wurde, um Fehlansteuerungen sicher ausschließen zu können. Die zentrale Steuerung kann gemäß dieser Ausführungsform erkennen, ob die Abweichung vom Verdrahtungsplan im Grunde nicht störend ist, etwa weil ein Sensor statt an dem vorgesehenen Eingang versehentlich an einem völlig äquivalent einsetzbaren anderen Eingang angeschlossen wurde. Die Sicherheitssteuerung ist dann nicht betriebsbereit, denn das Steuerungsprogramm ist auf einen festen Verdrahtungsplan zugeschnitten. Sie kann aber, statt darauf zu insistieren, die physischen Anschlüsse umzustecken, auch vorschlagen, das Steuerungsprogramm an die neue Situation zu adaptieren, was für den Anwender weniger aufwändig ist. Ein anschließend erneut durchgeführter Selbsttest stellt sicher, dass die vorgesehene Auswertungslogik mit sämtlichen Anforderungen an Fehlersicherheit, Schaltzeiten, Ansprechzeiten und dergleichen in der realen Anlage implementiert ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: die beispielhafte Darstellung einer Anzeige einer grafischen Benutzerober- fläche für die Konfiguration und/oder Programmierung einer Sicherheits- steuerung;
- Fig. 2: eine schematische Darstellung einer modularen Sicherheitssteuerung mit angeschlossenen Sensoren und Aktoren, die erfindungsgemäß konfiguriert und/oder programmiert werden kann;
- Fig. 3a: eine beispielhafte Konfiguration von Anschlussmodulen mit Belegung ihrer Eingänge und Ausgänge durch Sensoren und Aktoren;
- Fig. 3b: eine beispielhafte grafische Darstellung der Auswertungslogik für die Konfi- guration gemäß Figur 3a;
- Fig. 4a: eine Konfiguration, welche aus der Konfiguration gemäß Figur 3a durch Vertauschung der Belegungen der Eingänge und Ausgänge sowie der An- schlussmodule entsteht;
- Fig. 4b: eine grafische Darstellung der Auswertungslogik für die Konfiguration ge- mäß Figur 4a, die erfindungsgemäß invariant gegenüber den zwischen der Konfiguration gemäß Fig. 3a und Fig. 4a vorgenommenen Vertauschungen ist; und
- Fig. 5: ein Ablaufschema als Übersicht über die Konfiguration und/oder Program- mierung einer Sicherheitsschaltung.

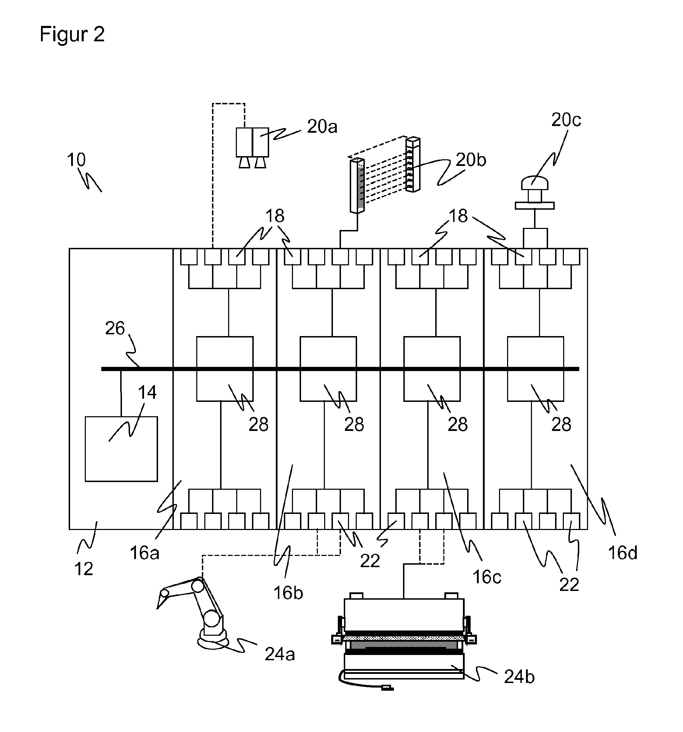

Figur 2 zeigt eine modulare Sicherheitssteuerung 10 mit einem zentralen Steuerungsmodul 12, welches eine sichere zentrale Steuerung 14 aufweist, und mit vier Anschlussmodulen 16a-d. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten.

Die Sicherheitssteuerung 10 hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalter 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

Ein Roboter 24a und eine Abkantpresse 24b sind als Beispiele Bedienpersonal bei unzulässigem Eingriff gefährdender Aktoren bevorzugt zweikanalig an Ausgänge 22 angeschlossen und können somit von dem Sicherheitsschaltgerät 10 einen Abschaltbefehl erhalten, um bei Erkennung einer Gefährdung oder eines unzulässigen Eingriffs durch Sicherheitssensoren 20a-b die Aktoren 24a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die zentrale Steuerung 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Sicherheitssteuerung 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 18 können auch Auswertungsaufgaben übernehmen oder gemeinsam mit der zentralen Steuerung 14 verteilte Auswertungen vornehmen, die von einfachen Bool'schen Verknüpfungen bis hin zu komplexen Auswertungen, etwa einer dreidimensionalen Sicherheitskamera, reichen können.

Das Sicherheitsschaltgerät 10 kann über ein Gateway, welches ein eigenes Modul bildet oder in die Sicherheitssteuerung 14 integriert ist, an eine externe Anlagensteuerung angeschlossen sein, welche mit nicht sicherheitsrelevanten Steuerungsaspekten befasst ist. Die Anbindung kann drahtlos oder drahtgebunden, in der Praxis meist über einen Feldbus erfolgen. Gibt die externe Steuerung einen Befehl an einen der Aktoren 24, und zwar alternativ über die Ausgänge 22, welche auch Abschaltsignale ausgeben können, oder auf eigene Ausgänge, so wird er nur dann wirksam, wenn die Sicherheitssteuerung 14 zustimmt, also etwa durch UND-Verknüpfung von Ansteuerung und Zustimmungssignal. Damit wird verhindert, dass die externe Anlagensteuerung eine gefährliche Situation schafft. Die externe Steuerung kann umgekehrt eine Abschaltung der Aktoren 24 nicht verhindern, da die Sicherheitsaufgaben durch die Sicherheitssteuerung 10 gesteuert werden.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe. Denkbar ist auch, dass mehrere Steuerungsmodule 12 als Kopf mehrerer Modulreihen dezentral angeordnet sind, etwa jeweils in der Nähe der zu überwachenden Teile der Gesamtanlage, die untereinander über einen Feldbus kommunizieren.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Erfindung betrifft die Konfiguration und Programmierung der Sicherheitssteuerung 10. Dabei wird unter Konfigurieren die Auswahl von Elementen 12, 16, 20, 24, sowie deren physische Anordnung und Verbindung beziehungsweise Verdrahtung verstanden. Programmieren ist das auf Basis von Benutzerangaben automatische Erzeugen und Zusammenfügen von der Konfiguration entsprechenden Programmteilen unter Einbeziehung logischer Auswertungsregeln, welche die Elemente 12, 16, 20, 24 miteinander verbinden, um Eingangssignale der Sensoren 20 zu Ansteuerungen an die Aktoren 24 zu verrechnen. Das Vorgeben der Logik, also der logischen Auswertungsregeln, ist eine Mischung aus Konfigurieren und Programmieren, denn der Anwender muss lediglich die logischen Verbindungsregeln vorgeben, was einer Konfiguration nahe kommt, während daraus aber erfindungsgemäß automatisch anhand der zu den Verbindungsregeln hinterlegten Programmteile das Programm für die Sicherheitssteuerung 10 generiert wird, worin eher ein Programmieren liegt. Im Folgenden wird meist vereinfachend der Begriff Konfigurieren verwendet, welcher situationsabhängig eine Programmierung einschließen soll.

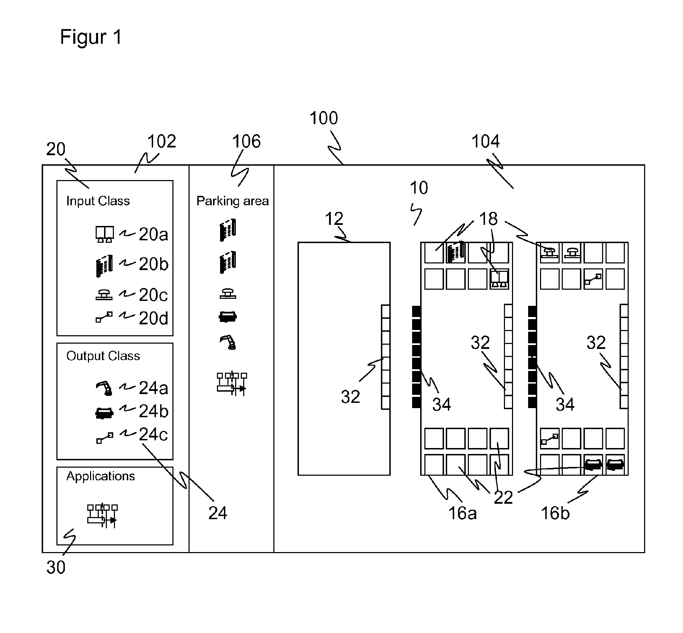

Figur 1 zeigt eine beispielhafte Anzeige 100 der grafischen Benutzeroberfläche (GUI, graphic user interface) eines nicht dargestellten Programmiergerätes zur Ausführung der erfindungsgemäßen Konfiguration einer Sicherheitssteuerung 10. Hier und im Folgenden werden gleiche Merkmale mit gleichen Bezugszeichen bezeichnet. Das Programmiergerät ist ein geeignetes Notebook, ein PC, ein PDA, ein Handy oder dergleichen mit einem Display für die Anzeige 100, einem Eingabegerät wie einer Tastatur und einer Maus und einem Prozessor zur Ausführung der Benutzeroberfläche und der Erstellung des resultierenden Konfigurationsplans, auch per Drucker, und des resultierenden Steuerungsprogramms für die Sicherheitssteuerung 10. Das Programmiergerät ist alternativ Teil der Sicherheitssteuerung 10 oder der übergeordneten Steuerung. Das Konfigurationswerkzeug, also das Programm für die grafische Benutzeroberfläche und die im Hintergrund zugehörigen Regeln zur Generierung des Steuerungsprogramms ist auf einem Speichermedium, wie einer CD oder einem USB-Stick, gespeichert. Bevorzugt ist es auch in der Sicherheitssteuerung 10 oder einer übergeordneten Steuerung gespeichert und kann von dort in einen üblichen Computer geladen und ausgeführt werden.

Anhand der Anzeige 100 wird nun beschrieben, wie ein Anwender die Konfigurierung der Sicherheitssteuerung 10 mit Hilfe der grafischen Benutzeroberfläche durchführt.

Die Anzeige 100 bietet in einem linken Fenster 102 an die Sicherheitssteuerung 10 anschließbare Elemente an, nämlich Sensoren oder Eingangsklassen (input class) 20, Aktoren oder Ausgangsklassen (output class) 24 und Teilapplikationen (applications) 30. Neben der dargestellten Sicherheitskamera 20a, dem Lichtgitter 20b, einem Schalter 20c und einer Lichtschranke 20d umfassen die Eingangsklassen weitere zweiund dreidimensionale Sicherheitskameras, Mutingsensoren, Sicherheitsmatten, Bumper, Sicherheitsschalter einschließlich Not-Aus-Schaltern, Zweihandschaltungen und weitere Geräte, die ein möglicherweise sicherheitsrelevantes Eingangssignal für die Sicherheitssteuerung 10 liefern können. Als Ausgangsklassen kommen über die dargestellten Roboter 20a, Pressen 20b und eine Lichtschranke 20c jegliche Maschinen, Roboter, Fahrzeuge, Lampen, Sirenen, aber auch Sensoren in Frage, die ein Feedback erhalten sollen, etwa zur vorübergehenden Deaktivierung (muting, blanking).

In einem rechten Fenster 104 wird die Sicherheitssteuerung 10 mit Steuerungsmodul 12 und Anschlussmodule 16a-b samt ihren Eingängen 18 und Ausgängen 22 angezeigt. Auch das Steuerungsmodul 10 kann Eingänge und/oder Ausgänge aufweisen. Das Steuerungsmodul 12 hat eine Buchse 32 und jedes Anschlussmodul 16 eine Buchse 32 und einen Stecker 34, um die Sicherheitssteuerung 10 als mechanisch einheitliche Modulreihe zusammenstecken zu können. Die Erfindung ist darauf nicht notwendig beschränkt, denn die Module können auch physisch voneinander getrennt sein, solange sie logisch verbunden bleiben. Mit einem kleinen Icon in einem Eingang 18 oder einem Ausgang 22 wird bildlich dargestellt, mit welchem Sensor 20 oder Aktor 24 dieser Anschluss 18, 22 verbunden sein soll. Das rechte Fenster 104 zeigt somit die Konfiguration von Modulen 12, 16a-b, die angeschlossenen Sensoren 20 und Aktoren 24 sowie die Zuordnung zu bestimmten Eingängen 18 und Ausgängen 22.

Die Arbeitsschritte eines Benutzers, die zu einer solchen Konfiguration führen, sind die folgenden: Aus den angebotenen Eingangs- und Ausgangsklassen wird ein benötigter Sensor 20 oder Aktor 24, im Folgenden manchmal zusammenfassend als Funktionseinheit 20, 24 bezeichnet, ausgewählt. Diese Funktionseinheit 20, 24 wird anschließend parametriert, indem durch verschiedene Fenster und Schaltflächen Werte, Modi und dergleichen eingestellt werden. Die derart parametrierte Funktionseinheit 20, 24 wird zunächst in einem mittleren Fenster 106 (Parking area) abgelegt. Mit Auswahl weiterer Funktionseinheiten 20, 24 werden diese Schritte wiederholt, bis sämtliche oder eine gewünschte Teilmenge der benötigten Funktionseinheiten 20, 24 in dem mittleren Fenster 106 abgelegt sind.

Mit Aufruf einer Zuordnungsfunktion werden dann automatisch eine Reihe weiterer Konfigurationsschritte ausgeführt. Selbstverständlich ist in einer alternativen, weniger komfortablen Ausführungsform möglich, diese Schritte einzeln von Hand auszuführen. Die Zuordnungsfunktion berücksichtigt sämtliche Funktionseinheiten 20, 24 in dem mittleren Fenster 106, kann aber auch auf eine durch Benutzerauswahl definierte Teilauswahl eingeschränkt werden.

Zuerst wird bestimmt, welche Eingänge 18 und Ausgänge 22 die Funktionseinheiten 20, 24 benötigen. Die hierfür geeigneten Anschlussmodule 16a-b werden ausgewählt. Sind nicht mehr genug Anschlüsse 18, 22 für die gewählten Funktionseinheiten 20, 24 vorhanden, so muss ein weiteres Anschlussmodul 16a-b angefügt oder ein vorhandenes durch ein solches mit mehr Anschlüssen ausgetauscht werden. Die somit ausreichend verfügbaren Anschlüsse 18, 22 werden dann den Funktionseinheiten 20, 24 zugeordnet und damit entschieden, an welche Eingänge 18 und Ausgänge 22 jede Funktionseinheit 20, 24 anzuschließen ist. Dabei kann eine Funktionseinheit 20, 24 mehrere Eingänge 18 und/oder Ausgänge 22 belegen. Dann werden die Funktionseinheiten 20, 24 in das rechte Fenster 104 verschoben, und zwar optisch als Symbol in jedem mit der Funktionseinheit 20, 24 verschalteten Eingang oder Ausgang. Im rechten Fenster 104 wird damit die fertige Konfiguration der Funktionseinheiten des mittleren Fensters 106 dargestellt, also ein Verdrahtungsplan, welche physischen Verbindungen zwischen der Sicherheitssteuerung 10 und Sensoren 20 beziehungsweise Aktoren 24 zu schaffen sind.

Die von der Zuordnungsfunktion gewählten Verbindungen können aber weiterhin jederzeit verändert werden. So kann eine Funktionseinheit 20, 24 wieder entfernt, in das mittlere Fenster 106 zurückgeschoben oder von dort durch erneuten Aufruf der Zuordnungsfunktion wieder angeschlossen werden. Ebenso können Zuordnungen von Funktionseinheiten 20, 24 zu Anschlüssen 18, 22 verändert werden, also vertauscht, verschoben, hinzugefügt oder entfernt, und auch Anschlussmodule 16 selbst können untereinander vertauscht, entfernt, eingefügt oder durch Anschlussmodule 16 mit anderen Anschlüssen 18, 22 ausgetauscht werden. Alle diese möglichen Manipulationen sollen im Folgenden als Änderungen des Verdrahtungsplans zusammengefasst werden.

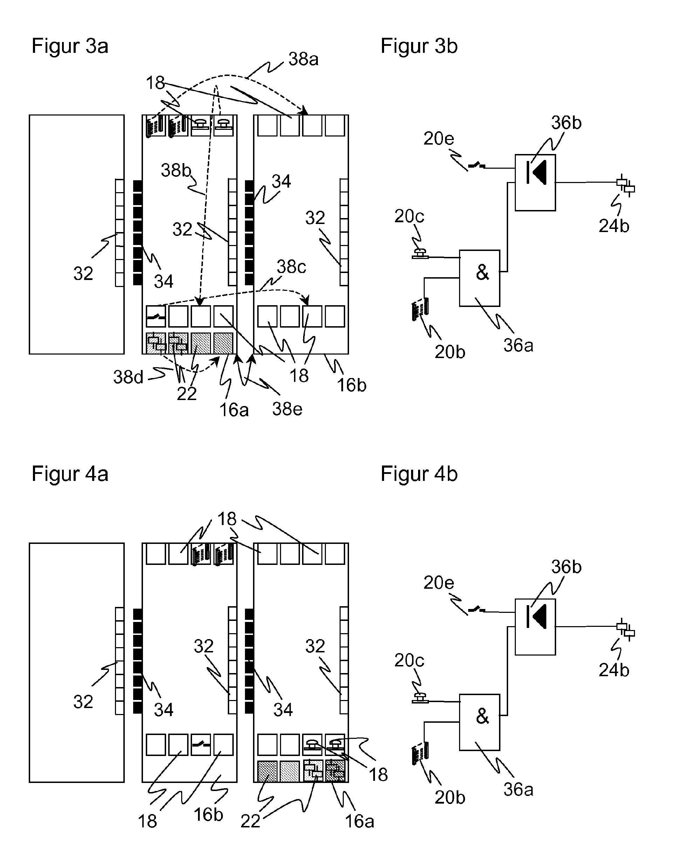

Zusätzlich zu dem Verdrahtungsplan, also der physischen Konfiguration mit vorgesehenen Verbindungen zwischen Funktionseinheiten 20, 24 und Anschlüssen 18, 22, ist für die Konfiguration und Programmierung der Sicherheitsteuerung 10 auch die Festlegung einer Auswertungslogik erforderlich, welche festlegt, in welcher Weise die Eingangssignale der Sensoren 20 zu Ansteuerungen der Aktoren 24 verrechnet werden sollen. In der Figur 3a ist ein Verdrahtungsplan für ein Not-Aus, einen Restart, ein Lichtgitter und einen OSSD-Ausgang dargestellt. Dabei ist zu beachten, dass die beiden Anschlussmodule 16a-b untereinander eine unterschiedliche Konfiguration von Anschlüssen haben, nur Anschlussmodul 16a hat optisch grau hervorgehobene Ausgänge 22. Wie oben bereits gesagt, können Anschlussmodule 16 die verschiedensten Anordnungen von Eingängen und/oder Ausgängen aufweisen, je nachdem, welche Art von Anschluss 18, 22 in welcher Anzahl und Anordnung benötigt wird. Das gezeigte Beispiel ist willkürlich, es können stattdessen nahezu beliebige Anschlussmodule 16 mit sicherheitsrelevanten Sensoren 20 oder Aktoren 24 verwendet werden.

Figur 3b zeigt die grafische Konfiguration einer zugehörigen Auswertungslogik. Dabei werden virtuelle Logikbausteine mit den Eingängen und Ausgängen der Sensoren 20 und Aktoren 24 verbunden, um die Auswertungsregeln und Abschaltpfade festzulegen. Im gezeigten Beispiel werden das Not-Aus 20c und das Lichtgitter 20b zunächst in einem virtuellen UND-Baustein 36a verknüpft. In einem virtuellen Restart-Baustein 36b wird das entstehende UND-verknüpfte Signal mit dem Signal des Restart-Eingangs 20e verknüpft, und das Resultat wirkt auf den OSSD, an den beispielsweise die Presse 24b angeschlossen ist. Somit kann die Presse 24b nur betrieben werden, wenn außerhalb einer Restart-Phase weder von dem Not-Aus 20c noch von dem Lichtgitter 20b ein Abschaltsignal anliegt, und wird in allen anderen Situationen sicherheitsgerichtet abgeschaltet. Das Konfigurationswerkzeug bietet dabei nur solche Verbindungsmöglichkeiten an, die mit dem jeweiligen Element 20, 24, 36 auch geleistet werden, also etwa keine zweikanalige Anbindung für eine einkanalige oder einkanalig parametrierte Funktionseinheit 20, 24.

Erfindungsgemäß wird die so konfigurierte Auswertungslogik bei Änderungen des Verdrahtungsplans automatisch nachgeführt, ist also invariant gegenüber solchen Änderungen, denn die Änderungen werden bei der abschließenden Generierung des Steuerungsprogramms automatisch richtig berücksichtigt. Dies wird durch den Vergleich von Figur 3a-b mit Figur 4a-b illustriert. Figur 4a zeigt eine Konfiguration, die durch Veränderungen des Verdrahtungsplans aus Figur 3a hervorgegangen ist. Dabei wurde im Einzelnen, wie durch Pfeile 38 in Figur 3a angedeutet, das Lichtgitter 20b durch eine Änderung 38a auf das Anschlussmodul 16b, das Not-Aus 20c durch eine Änderung 38b auf andere Eingänge 18 innerhalb des Anschlussmoduls 16a, der Restart durch eine Änderung 38c auf das Anschlussmodul 16b und der OSSD 24a durch eine Änderung 38d auf andere Ausgänge 22 innerhalb des Anschlussmoduls 16a verschoben. Zudem wurden die beiden Anschlussmodule 16a, 16b durch eine Änderung 38e vertauscht. Alle diese Änderungen sind beispielhaft, zusätzlich hätten weitere Anschlussmodule 16 eingefügt, durch andere Typen von Anschlussmodulen 16 ersetzt werden können und dergleichen.

Die geänderte Konfiguration der Figur 4a hat sich auf die zugehörige Auswertungslogik, wie sie Figur 4b zeigt, nicht ausgewirkt. Die Änderungen des Verdrahtungsplans wurden automatisch nachgezogen. Die Beziehung Sensor - Logik - Aktor ist die gleiche geblieben und wurde von dem Konfigurationswerkzeug entsprechend berücksichtigt. Dabei können abweichend von der Darstellung die Elemente der grafisch gezeigten Auswertungslogik mit Namen der Elemente 20, 24, 36 und dem zugehörigen Anschluss bezeichnet werden, also etwa zu Figur 3b "Lichtgitter an Modul 1 (gemischtes Ein-Ausgangsmodul mit 8 Eingängen und 4 Ausgängen), Eingänge 1 und 2", dagegen zu Figur 4b "Lichtgitter an Modul 1 (Eingangsmodul mit 8 Eingängen), Eingänge 3 und 4". In diesem Fall würde die Änderung des Verdrahtungsplans auch in der grafischen Darstellung der Auswertungslogik sichtbar, weiterhin müsste der Anwender sich darum aber nicht kümmern, da die Belegung automatisch nachgeführt wird. Andere grafische oder textliche Kennzeichnungen sind denkbar.

Das automatische Nachführen der Auswertungslogik oder einer Zuordnungsliste erleichtert es erheblich, den Verdrahtungsplan zu optimieren. So können funktionell zusammengehörige Funktionseinheiten nachträglich Anschlüssen 18, 22 am selben Anschlussmodul zugeordnet werden, wobei eine Zusammengehörigkeit durch dieselbe Gefahrenquelle, aber auch durch denselben Typ von Funktionseinheit 20, 24 definiert sein kann. Eine häufige Optimierung ist, mit möglichst wenigen Anschlussmodulen 16 auszukommen, wobei umgekehrt manchmal gewünscht sein kann, Anschlüsse 18, 22 für spätere Erweiterungen freizuhalten. Derartige Optimierungen können manuell, aber auch automatisch nach gewünschten Kriterien vorgenommen werden. Der Anwender ist aufgrund der invarianten Auswertungslogik nicht gezwungen, strikt zuerst den Verdrahtungsplan und anschließend die Logik zu konfigurieren, sondern kann diese Schritte stückweise und nach seinem Belieben miteinander vermischen.

Ein Verdrahtungsplan oder eine Auswertungslogik kann, statt über die grafische Benutzeroberfläche erzeugt zu werden, auch von einem Speichermedium geladen werden. Besonders reizvoll ist, wenn Teilverdrahtungen oder Teillogiken bereits mit einem Sensor 20 oder Aktor 24 mitgeliefert werden, so dass die Konfiguration also mit dem Gerät ausgeliefert werden kann. Eine andere besondere Möglichkeit, einen Verdrahtungsplan zu laden, ist die automatische Abfrage der Identität aller an die Sicherheitssteuerung 10 angeschlossenen Funktionseinheiten, woraus dann die zentrale Steuerung 14 selbsttätig den aktuellen Verdrahtungsplan erstellen kann, der dann wiederum nachbearbeitet, erweitert oder für spätere Verwendung an der gleichen oder einer anderen Anlage gespeichert wird.

Eine grafisch erzeugte Auswertungslogik kann nach Sicherheitskriterien verifiziert werden, also beispielsweise ob alle Abschaltpfade fehlersicher sind, ob sie schnell genug schalten, ob die Sicherheitssteuerung 10 insgesamt schnell genug anspricht oder ob jede Gefahrenquelle überwacht wird. Dabei können abstrakte Vorgaben gemacht und als Verifikationsregel eingegeben werden, etwa dass die Presse nie bei offener Tür laufen soll, dass ein bestimmter Not-Aus die gesamte Anlage betreffen soll und dergleichen. Das Konfigurationswerkzeug kann während der Konfiguration oder spätestens während des Tests Sensoren 20, Aktoren 24 und Teillogiken vorschlagen, welche diese Regeln erfüllen.

Mit Begriffen wie Auswählen, Verbinden und dergleichen sind im Zusammenhang mit der grafischen Benutzeroberfläche Symbole für Sensoren 20, Aktoren 24, Module 12, 16, Verbindungen, Logikelemente 36a-c und entsprechende Logikregeln über Menüs, Icons, Drag & Drop und dergleichen gemeint. Eine physische Verdrahtung folgt erst anschließend anhand des Konfigurationsplans.

Alternativ zu einzelnen Funktionseinheiten 20, 24 können auch vorgefertigte, mehrfach gebrauchte oder standardisierte Teilapplikationen 30 eingebunden werden. Diese bringen ihre zugehörigen parametrierten Funktionseinheiten 20, 24 sowie die innere logische Verknüpfung bereits mit, so dass nur noch die äußere logische Verknüpfung vorgenommen werden muss, indem Freigaben und Abschaltpfade definiert werden. Ein Beispiel unter vielen ist ein sogenanntes "sequential muting", bei dem einige Lichtstrahlen eines Lichtgitters nacheinander stumm geschaltet werden, beispielsweise damit das erlaubte Durchfahren einer Palette mit bekannten geometrischen Eigenschaften nicht zu einem Abschaltsignal führt. Solche Teilapplikationen beschleunigen die Konfiguration und machen sie fehlersicherer, weil die innere Konfiguration der Teilapplikation nur einmal, auch ab Werk oder durch einen Experten, vorgegeben werden.

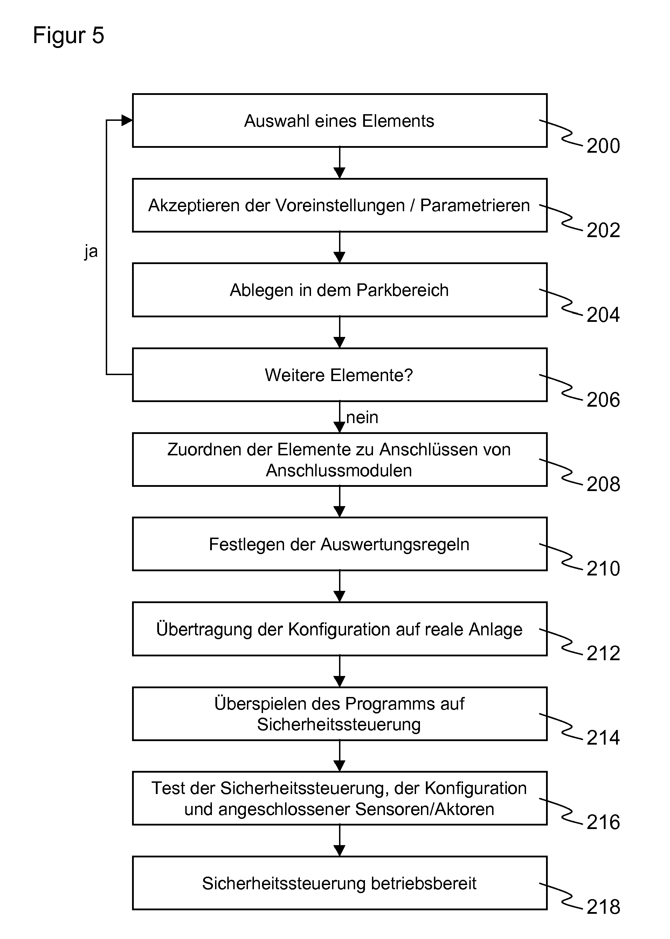

Figur 5 gibt noch einmal einen Gesamtüberblick über den Ablauf einer Konfiguration und Programmierung einer Sicherheitssteuerung 10. In einem ersten Schritt 200 wird ein Element ausgewählt, welches einen anzuschließenden Sensor 20 oder Aktor 24 repräsentiert.

Die ausgewählte Funktionseinheit 20, 24 wird in einem Schritt 202 parametriert, wobei jeweils das Akzeptieren von Voreinstellungen ausreichen kann. Denkbare Parameter sind Typbezeichnungen einschließlich Bestellnummer, Name oder Hersteller, die Anzahl der Anschlussklemmen, die Art der Anschlüsse, insbesondere ob digital oder analog, die einkanalige oder zweikanalige Anbindung, die Art des Signals, insbesondere ob sich die beiden Kanäle eines zweikanaligen Anschlusses antivalent, entgegengesetzt oder äquivalent verhalten, elektrische Größen wie Strom, Spannung oder Kapazität, ein Kommunikationsprotokoll, also eine Einigung zwischen zentraler Steuerung 14 und der von dem neuen Element repräsentierten Funktionseinheit 20, 24 über die Signalübertragung, welches beispielsweise die Art des Signals, die Eingangs- und Ausgangsverzögerung oder eine Diskrepanzzeit (Zeit, innerhalb derer die beiden Kanäle eines zweikanaligen Anschlusses dasselbe Signal anzeigen müssen, damit es als gültig erkannt wird) festlegt, physische Eigenschaften der Anschlüsse, insbesondere Drahtdurchmesser oder Steckertyp sowie Testmöglichkeiten einschließlich Testsignale, Testdauer, Testzeitpunkt, erwartete Ausgaben bei einem Test, Dauer oder Zeitpunkt der Testung und weitere denkbare Größen wie Kompatibilität zu der Norm IEC61131-2. Die Parameter müssen also die vollständige und sichere Einbindung in die Sicherheitssteuerung 10 ermöglichen, vor allem hinsichtlich sicherheitsgerichteter Sensordaten und Abschaltsignale.

Die Funktionseinheit 20, 24 wird dann in einem Schritt 204 in dem mittleren Fenster 106 abgelegt. Im Schritt 206 entscheidet sich der Anwender, weitere Funktionseinheiten 20, 24 auszuwählen oder die in dem Fenster 106 abgelegten Funktionseinheiten 20, 24 in die Sicherheitssteuerung einzubinden. Dabei gibt es keine Beschränkungen hinsichtlich der Auswahl weiterer Funktionseinheiten, der Anwender kann also jederzeit weitere Funktionseinheiten 20, 24 auswählen und einbinden.

Die in dem mittleren Fenster abgelegten Funktionseinheiten 20, 24 werden durch Aufruf der Zuordnungsfunktion in einem Schritt 208 Eingängen 18 und Ausgängen 22 geeigneter Anschlussmodule 16a-b zugeordnet, wobei gegebenenfalls Anschlussmodule 16a-b automatisch ausgetauscht oder ergänzt werden, und dies entsprechend in dem Fenster 106 dargestellt.

In einem Schritt 210 werden die Auswertungsregeln festgelegt, wie dies oben im Zusammenhang mit Figur 2 beschrieben wurde. Die entstehende Konfiguration kann durch Änderungen des Verdrahtungsplans manuell oder automatisch geändert oder optimiert werden, wobei die Auswertungsregeln erfindungsgemäß automatisch nachgeführt werden.

In einem Schritt 212 wird der in der Anzeige 100 gezeigte Konfigurationsplan in die reale Anlage übertragen, indem entsprechende Leitungen zwischen Sensoren 20, Aktoren 24 und der Sicherheitssteuerung 10 gelegt und angeschlossen werden. Die benötigten Funktionseinheiten 20, 24 sowie die benötigten Steuerungsmodule 10 und Anschlussmodule 16 können zuvor direkt über eine Maske online oder offline bestellt werden. Der Konfigurationsplan wird ausgedruckt oder anders angezeigt, und die Komponenten werden in der Werkhalle verdrahtet, ohne dass hierfür eine tiefere technische Kompetenz erforderlich wäre als das Lesen des Plans.

Aus der grafisch entworfenen Logik erstellt das Konfigurationswerkzeug in einem Schritt 214 ein Steuerungsprogramm durch Zusammenstellen von den Logikbausteinen 36a-b entsprechenden Teilprogrammen und Einbindung in ein Gesamtprogramm, welches auf die zentrale Steuerung 14 überspielt wird.

Die Steuerung 14 kann dann in einem Schritt 216 einen Test ausführen und dabei sämtliche angeschlossenen Funktionseinheiten 20, 24 nach ihrem Typ abfragen, gegebenenfalls einige oder alle der eingestellten Parameter an die Funktionseinheit 20, 24 übertragen, damit deren Parametrierung mit der Konfiguration übereinstimmt, und feststellen, ob die Anschlüsse richtig vorgenommen wurden. Dazu müssen Anschlüsse 18, 22 für eine entsprechende Datenkommunikation ausgebildet sein, beispielsweise über IO-Link oder ein Kommunikationsprotokoll, welches an den Anschlüssen 18, 22 die für den Datenaustausch benötigten Signale austauschen kann. Eine Übertragung von Daten ist in beide Richtungen denkbar: Hin zu den Funktionseinheiten 20, 24, um letztere zu parametrieren, oder in umgekehrter Richtung von den Funktionseinheiten 20, 24 zu der Sicherheitssteuerung 10 oder dem Konfigurationswerkzeug, um eine tatsächliche Parametrierung oder vollständige Konfiguration in das Konfigurationswerkzeug einzulesen.

Stimmen die vorgenommenen Anschlüsse nicht, so erzeugt die Steuerung 14 eine Fehlermeldung mit einem Hinweis, welche Funktionseinheiten 20, 24 beziehungsweise welche Verbindungen geändert werden müssen. Ein solcher Hinweis wird bevorzugt wieder über das Konfigurationswerkzeug angezeigt und bearbeitet. Sofern die Logik mit der vorhandenen physischen Konfiguration verträglich ist, kann die Steuerung 14 auch direkt oder über das Konfigurationswerkzeug vorschlagen, statt der Verdrahtung das Steuerungsprogramm anzupassen. Abschließend kann die Steuerung 14 jede angeschlossene Funktionseinheit 20, 24 gemäß der Testkonfiguration testen oder zu einem Selbsttest auffordern. Danach ist die Sicherheitssteuerung 10 in einem Schritt 218 betriebsbereit.

Die oben für die Sicherheitssteuerung 10 beschriebenen und bei geforderter Sicherheitskategorie normierten Sicherheitsanforderungen gelten auch für die Konfiguration und Programmierung, besonders für die Generierung des Programms sowie für die Übertragung des Programms auf die Steuerung 14. Das Programmiergerät selbst darf notfalls abstürzen, da noch keine Gefahrenquellen existieren, die damit erstellte Konfiguration und das Programm dagegen müssen fehlersicher sein.

## Patentansprüche

1. Verfahren zum Programmieren und/oder Konfigurieren einer Sicherheitssteuerung (10) mit einer Steuerung (14) und mindestens einem Anschlussmodul (16), welches zumindest einen Eingang (18) für einen Sensor (20) und/oder zumindest einen Ausgang (22) für einen Aktor (24) aufweist, wobei Verbindungen zwischen den Sensoren (20) und Aktoren (24) und den Eingängen (18) und Ausgängen (22) als Verdrahtungsplan und logische Auswertungsregeln, welche festlegen, wie Signale der Sensoren (20) zu Ansteuerungen für die Aktoren (24) zu verrechnen sind, als Auswertungslogik eingestellt und in einer grafischen Benutzeroberfläche angezeigt werden,
**dadurch gekennzeichnet,**
**dass** bei einer Veränderung des Verdrahtungsplans die Auswertungslogik erhalten bleibt.

2. Verfahren nach Anspruch 1,
wobei Veränderungen des Verdrahtungsplans durch manuelles oder automatisches Verschieben von Sensoren (20) oder Aktoren (24) auf andere Eingänge (18) oder Ausgänge (22), Vertauschen von Anschlüssen von Sensoren (20)
oder Aktoren an Eingänge (18) oder Ausgänge (22), Austausch, Vertauschen, Wegnahme oder Hinzufügen eines Anschlussmoduls (16) und Neuzuweisung der Sensoren (20) oder Aktoren (24) auf das neue oder andere Anschlussmodule (16) erfolgen.

3. Verfahren nach Anspruch 1 oder 2,
wobei der Verdrahtungsplan und die Auswertungslogik mittels einer grafischen Benutzeroberfläche erzeugt oder von einem Speichermedium geladen werden, insbesondere einem Speichermedium der Sicherheitssteuerung (10) oder eines Sensors (20) oder Aktors (24).

4. Verfahren nach einem der vorhergehenden Ansprüche,
wobei die erstellte Auswertungslogik darauf geprüft wird, ob gestellte Sicherheitsanforderungen erfüllt werden, insbesondere Schaltzeiten und sichere Schaltwege, und/oder wobei Teillogiken ersetzt oder vorgeschlagen werden.

5. Verfahren nach einem der vorhergehenden Ansprüche,
wobei der Verdrahtungsplan durch Verschiebungen oder Vertauschungen von Zuordnungen zwischen Sensoren (20) und Aktoren (24) zu Eingängen (18) und Ausgängen (22) und/oder durch Verschiebungen, Austausch, Entfernen oder Ergänzen von Anschlussmodulen (16) automatisch oder manuell optimiert wird, insbesondere um einen optisch oder funktionell übersichtlichen Verdrahtungsplan, kurze Schaltzeiten und/oder eine minimale Anzahl von Anschlussmodulen (16) zu erreichen oder um Anschlüsse (18, 22) für weitere Sensoren (20) und/oder Aktoren (24) bereitzustellen.

6. Verfahren nach einem der vorhergehenden Ansprüche,
wobei bei Entfernen eines Sensors (20) oder eines Aktors (24) aus dem Verdrahtungsplan die Auswertungslogik gespeichert und bei erneutem Hinzufügen desselben oder eines funktionsgleichen Sensors (20) oder Aktors (24) die Auswertungslogik automatisch wiederhergestellt oder zur Wiederherstellung vorgeschlagen wird.

7. Verfahren nach einem der vorhergehenden Ansprüche,
wobei aus der Auswertungslogik ein Steuerungsprogramm generiert wird, indem zu logischen Auswertungsregeln hinterlegte Programmteile in der Sicherheitssteuerung (10) erstellt, aktiviert und/oder verknüpft werden, und wobei das Auswertungsprogramm sicher auf die zentrale Steuerung (14) übertragen wird.

8. Verfahren nach einem der vorhergehenden Ansprüche,
wobei die zentrale Steuerung (14) testet, ob in der realen Anlage angeschlossene Sensoren (20) und Aktoren (24) dem Verdrahtungsplan entsprechend mit Eingängen (18) und Ausgängen (22) verbunden sind, und wobei bei Abweichungen vom Verdrahtungsplan, welche mit der Auswertungslogik verträglich sind, ein neues Steuerungsprogramm generiert und in die zentrale Steuerung (14) übertragen wird, welches der tatsächlichen Verdrahtung entspricht.

9. Vorrichtung zum Programmieren und/oder Konfigurieren einer Sicherheitssteuerung mit einem Verfahren nach einem der Ansprüche 1 bis 8, wobei die Vorrichtung eine Auswertungseinheit, ein Display für die grafische Benutzeroberfläche und eine Eingabeeinrichtung für deren Benutzung aufweist, insbesondere die Vorrichtung Teil der Sicherheitssteuerung ist.

10. Computerprogrammprodukt mit einer Speichereinrichtung, welche Programmcode zum Durchführen eines Verfahrens nach einem der Ansprüche 1 bis 9 hält, wenn der Programmcode auf einem Computer ausgeführt wird.
